# EUROPÄISCHE PATENTSCHRIFT

(11) **EP 0 484 657 B1**
(45) Veröffentlichungstag und Bekanntmachung des Hinweises auf die Patenterteilung: **07.07.1993**
(21) Anmeldenummer: 91115257.7
(22) Anmeldetag: 10.09.1991
(51) Int. Cl.: F02M 25/08, B60K 15/035

(54) **Vorrichtung zum vorübergehenden Speichern und dosierten Einspeisen flüchtiger Kraftstoffbestandteile in das Ansaugrohr einer Brennkraftmaschine**
Device for the temporary storage and controlled feeding of volatile fuel components into the induction pipe of a combustion engine
Dispositif pour l'emmagasinage provisoire et l'alimentation dosée de composants volatiles du carburant dans le tube d'aspiration d'un moteur à combustion

(30) Priorität: 06.11.1990 DE 4035158
(43) Veröffentlichungstag der Anmeldung: 13.05.1992
(73) Patentinhaber: Firma Carl Freudenberg, 69469 Weinheim (DE)
(72) Erfinder: Sausner, Andreas, W-6000 Frankfurt 71 (DE); Zabeck, Sebastian, W-6944 Hemsbach (DE)

(56) Entgegenhaltungen:
- WO-A-90/11443
- DE-A- 3 624 441
- DE-C- 3 802 664
- US-A- 4 949 695

## Beschreibung

Die Erfindung betrifft eine Vorrichtung zum vorübergehenden Speichern und dosierten Einspeisen der im Freiraum einer Tankanlage befindlichen flüchtigen Kraftstoffbestandteile in das Ansaugrohr einer Brennkraftmaschine, bei der ein Sperrventil in einer Leitung angeordnet ist, die durch ein Absorptionselement in das Ansaugrohr der Brennkraftmaschine geführt ist, wobei in der Leitung eine Meßeinrichtung zur Erzeugung eines dem durchgesetzten Massenstrom entsprechenden ersten Signals angeordnet ist und wobei dem Sperrventil eine Hilfseinrichtung zur Erzeugung eines der Ventilstellung quantitativ entsprechenden zweiten Signals zugeordnet ist.

Eine solche Vorrichtung ist aus der WO-A-90/11 443 bekannt. Die Vorrichtung und das Verfahren zur Überprüfung der Ansteuerbarkeit eines Tankentlüftungsventils, über das eine mit Kraftstoffdämpfen beladene Zusatzluftmenge dem Ansaugbereich einer Brennkraftmaschine zuführbar ist, beruht auf einer Stellglieddiagnose für den Bereich der Tankentlüftung im Betrieb des Kraftfahrzeugs, unabhängig von dem Luft-Kraftstoffverhältnis des Regeneriergasstromes des Aktivkohlefilters. Bei Betätigung des Tankentlüftungsventils wird eine Zusatzluftmenge durch den Aktivkohlefilter zu dem Ansaugbereich der Brennkraftmaschine geleitet, wobei sich durch den Durchfluß dieser Luftmenge Größen ändern, die von Sensoren in Strömungsrichtung beiderseits des Tankentlüftungsventils registriert werden.

Eine ähnliche Vorrichtung ist aus der DE-PS 38 02 664 bekannt. Sie soll das Entweichen der im Freiraum des Kraftstoffbehälters einer Brennkraftmaschine stets vorhandenen flüchtigen Kraftstoffbestandteile in die Atmosphäre verhindern und bedient sich der Verwendung einer speziellen, zwischen dem Freiraum und der Atmosphäre angeordneten Entlüftungsleitung, in der eine Speicherkammer mit einem Absorptionselement angeordnet ist. Dieses besteht zumeist aus einem durchlässigen Körper aus Aktivkohle, der geeignet ist, ein erhebliches Volumen flüchtigen Kraftstoffes vorübergehend zu speichern. Zur Regenerierung des Absorptionselementes wird Frischluft während des normalen Betriebes der Brennkraftmaschine durch dasselbe hindurchgezogen, wozu eine Leitung dient, die die Speicherkammer mit dem Ansaugrohr der Brennkraftmaschine verbindet. Außerdem ist bekannt, daß der Massenstrom durch die Zuleitung zum Ansaugrohr einer Brennkraftmaschine durch Ventile regelbar ist. Dabei ist dem Sperrventil ein Hilfsventil in Serie ummittelbar nach geschaltet, wobei das Hilfsventil durch einen Unterdruckversteller verschließbar ist, der durch den Differenzdruck zwischen der Steuerkammer und der Atmosphäre betätigbar ist.

Dabei ist allerdings zu beachten, daß eine Kontrolle der dosierten Einspeisung flüchtiger Kraftstoffbestandteile in das Ansaugrohr einer Brennkraftmaschine von entscheidender Wichtigkeit ist. Nur dann lassen sich die Vorteile dieser Vorrichtung ohne Einschränkung nutzen. Treten in der aus vielen Einzelteilen bestehenden Vorrichtung Störungen hinsichtlich des Massenstromes auf, so ist es nicht möglich, diese Unregelmäßigkeiten zu erkennen und entsprechend zu reagieren. Eine Betriebsstörung der Vorrichtung wirkt sich negativ auf die Belastung der Umwelt durch Abgasschadstoffe aus. Unverbrannte Kohlenwasserstoffe entweichen dann beispielsweise aus einer defekten Leitung in die Atmosphäre, ohne daß dies von den Betreibern der Brennkraftmaschine bemerkt wird. Auch das Betriebsverhalten der Brennkraftmaschine wird durch Funktionsstörungen der Vorrichtung, insbesondere durch unrunden Motorlauf, negativ beeinflußt.

Der Erfindung liegt die Aufgabe zugrunde, eine Vorrichtung der eingangs genannten Art derart weiterzuentwickeln, daß der durchgesetzte Massenstrom flüchtiger Kraftstoffbestandteile durch die Leitung in das Ansaugrohr einer Brennkraftmaschine kontrollierbar ist. Dadurch wird in Verbindung mit einer Regelung in den verschiedenen Betriebszuständen einer Brennkraftmaschine eine optimale Füllung der Brennräume unter Einbeziehung der flüchtigen Kraftstoffbestandteile erreicht und die Schadstoffbelastung der Umwelt durch die Brennkraftmaschine wird deutlich reduziert.

Diese Aufgabe wird erfindungsgemäß dadurch gelöst, daß die Hilfseinrichtung zum Vergleichen des ersten und des zweiten Signals vorgesehen ist und daß die Hilfseinrichtung mit wenigstens einem Hilfsmittel zur Anzeige von Abweichungen des ersten Signals in bezug auf das zweite Signal versehen ist. Die erfindungsgemäße Vorrichtung zur Kontrolle des dosierten Einspeisens flüchtiger Kraftstoffbestandteile in das Ansaugrohr einer Brennkraftmaschine ermöglicht die Überwachung und Einflußnahme auf den Massenstrom flüchtiger Kraftstoffbestandteile in das Ansaugrohr. Durch die Koppelung der Meßeinrichtung mit einer Hilfsreinrichtung, die zur Betätigung des Sperrventils beispielsweise als Steuergerät ausgebildet sein kann und einem Hilfsmittel, das Unregelmäßigkeiten des Massenstromes in der Vorrichtung anzeigt, können auftretende Störungen im System frühzeitig erkannt und behoben werden. Bei geringen Abweichungen des Durchflusses durch die Meßeinrichtung in das Ansaugrohr von einem für optimale Betriebsbedingungen der Brennkraftmaschine festgelegten Sollwert, beispielsweise durch Ablagerungen im Hilfsventil, ist das Steuergerät in der Lage, über das Sperrventil regulierend auf die Zuführung des Gases in das Ansaugrohr Einfluß zu nehmen. Die Sollwerte, die dem Vergleich mit den Istwerten des durchgesetzten Massenstromes flüchtiger Kraftstoffbestandteile zugrundeliegen, sind vorteilhafterweise in einem Kennfeld abgelegt, das der Hilfseinrichtung zugeordnet ist.

Die Sollwerte des Massenstromes in das Ansaugrohr der Brennkraftmaschine sind ständig durch die Hilfseinrichtung mit den Istwerten, deren Signale von der Meßeinrichtung übermittelt werden, vergleichbar. Liegen die Beträge der Abweichungen beider Werte außerhalb einer willkürlich festgelegten Toleranz, erfolgt die Betätigung des Sperrventils durch die Hilfseinrichtung. Die Geschwindigkeit, mit der das Sperrventil auf Signale der Hilfseinrichtung reagiert, ist maßgebend für die Anpassung an die dynamischen Vorgänge in der Vorrichtung. Je schneller das Sperrventil auf die Signale der Hilfseinrichtung reagiert, desto vorteilhafter ist die Wirkung der Vorrichtung hinsichtlich Abgasemissionen und Betriebsverhalten der Brennkraftmaschine. Sind Abweichungen von Soll- und Istwerten des Massenstromes, beispielsweise durch Defekte in der Vorrichtung, nicht mehr ausregelbar, kann dies auf einem Hilfsmittel, das als Anzeigeinstrument ausgebildet sein kann, erkannt werden.

Nach Anspruch 2 ist die Meßeinrichtung in Strömungsrichtung vor dem Absorptionselement und dem Sperrventil angeordnet. Hierbei ist von Vorteil, daß die Meßeinrichtung an einem gut zugänglichen Ort angebracht sein kann und nicht in der Nähe des Ansaugrohres angeordnet sein muß. Tritt ein Defekt in Form einer undichten Schlauchverbindung oder eines abgefallenen Schlauches an einer beliebigen Stelle der Vorrichtung auf, wird der durchgesetzte Massenstrom durch die Meßeinrichtung geringer. Die daraus resultierende Abweichung von Ist- und Sollwert wird durch die Hilfseinrichtung erfaßt und, falls die Abweichung nicht ausregelbar ist, auf einem Anzeigegerät angezeigt.

Nach Anspruch 3 sind die Meßeinrichtung und das Sperrventil signalleitend verbunden und das Sperrventil ist durch das Signal der Meßeinrichtung über die Hilfseinrichtung betätigbar. Das Sperrventil ist während des Betriebes der Brennkraftmaschine ständig signalleitend mit der Hilfseinrichtung verbunden. Die Signale der Meßeinrichtung bewirken über eine Hilfseinrichtung, beispielsweise in Form eines Steuergerätes, eine Betätigung des Sperrventils.

Nach Anspruch 4 kann in der Hilfseinrichtung ein Mittel zur Unterdrückung einer Anzeige von Abweichungen enthalten sein, die einen willkürlich festgelegten Schwellwert unterschreiten. Hierdurch informiert das Hilfsmittel, das beispielsweise als Anzeigeinstrument ausgebildet sein kann, nur bei kritischen Abweichungen des Istwertes vom Sollwert des durchgesetzten Massenstromes durch die Leitung in das Ansaugrohr der Brennkraftmaschine. Eine bessere Übersichtlichkeit bei der Überwachung der Funktion der Vorrichtung und eine einfachere Bedienbarkeit sind dadurch gewährleistet.

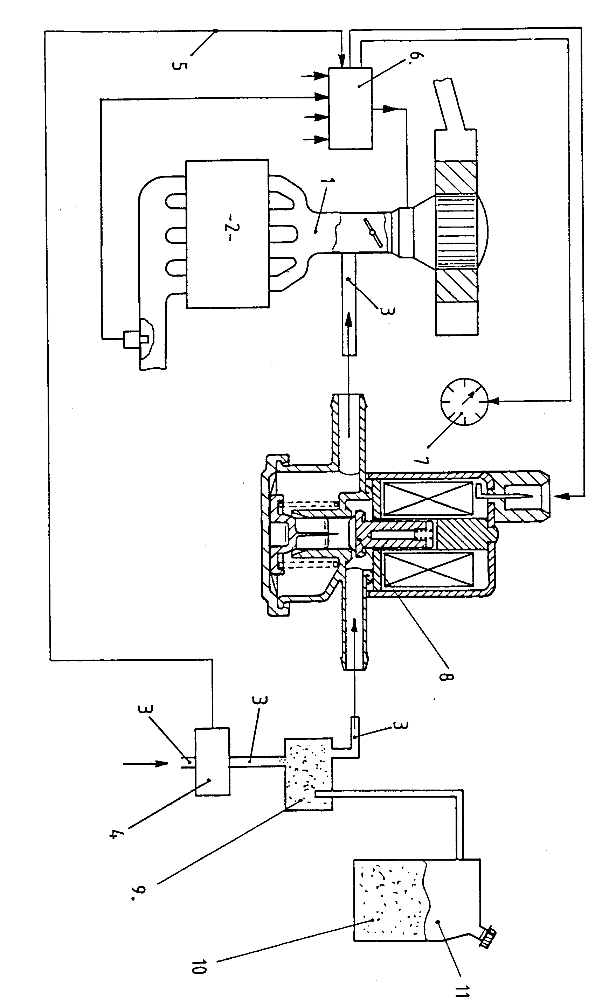

Die Bauteile der vorliegenden Erfindung werden nachfolgend anhand der Zeichnung weiter erläutert.

Eine Vorrichtung zum dosierten Einspeisen flüchtiger Kraftstoffbestandteile in das Ansaugrohr einer Brennkraftmaschine funktioniert beispielsweise wie in der DE-PS 38 02 664 beschrieben.

Die Vorrichtung dient dem vorrübergehenden Speichern und dosierten Einspeisen der im Freiraum 11 einer Tankanlage 10 befindlichen flüchtigen Kraftstoffbestandteile in das Ansaugrohr 1 einer Brennkraftmaschine 2.

Zusätzlich zu den in der DE-PS 38 02 664 abgebildeten Bauteilen ist eine Meßeinrichtung 4 in Strömungsrichtung vor dem Absorptionselement 9 und dem in Leitung 3 befindlichen Sperrventil 8 angeordnet. Die Meßeinrichtung 4 ist über die Signalleitung 5 mit der Hilfseinrichtung 6 verbunden, die als Steuergerät ausgebildet ist und versorgt diese mit den Kennwerten des Massendurchfluß-Istwertes. In der Hilfseinrichtung 6 kann ein Kennfeld abgelegt sein, das den Massendurchfluß-Sollwert enthält. Ab einer festgelegten Höhe einer Abweichung des Istwertes vom Sollwert wird diese Abweichung auf dem Hilfsmittel 7 angezeigt. Außerdem versucht die Hilfseinrichtung 6 dann die beiden Werte durch Steuerung des Sperrventils 8 in Übereinstimmung zu bringen. Ist dies gelungen, erlischt die Anzeige des Hilfsmittels 7. Außerdem kann in der Hilfseinrichtung 6 ein weiteres Mittel enthalten sein, das eine Regelung des Sperrventils 8 und eine Anzeige auf dem Hilfsmittel 7 erst eine bestimmte Zeit nach einer Abweichung des Istwertes vom Sollwert zuläßt. Dadurch haben kleinere Unregelmäßigkeiten in der Vorrichtung oder bereits erfolgte Steuerungen des Sperrventils 8 Zeit, sich zu stabilisieren.

## Patentansprüche

1. Vorrichtung zum vorübergehenden Speichern und dosierten Einspeisen der im Freiraum (11) einer Tankanlage (10) befindlichen flüchtigen Kraftstoffbestandteile in das Ansaugrohr (1) einer Brennkraftmaschine (2), bei der ein Sperrventil (8) in einer Leitung (3) angeordnet ist, die durch ein Absorptionselement (9) in das Ansaugrohr (1) der Brennkraftmaschine (2) geführt ist, wobei in der Leitung (3) eine Meßeinrichtung (4) zur Erzeugung eines dem durchgesetzten Massenstrom entsprechenden ersten Signals angeordnet ist und wobei dem Sperrventil (8) eine Hilfseinrichtung (6) zur Erzeugung eines der Ventilstellung quantitativ entsprechenden zweiten Signals zugeordnet ist, dadurch gekennzeichnet, daß die Hilfseinrichtung (6) zum Vergleichen des ersten und des zweiten Signals vorgesehen ist und daß die Hilfseinrichtung (6) mit wenigstens einem Hilfsmittel (7) zur Anzeige von Abweichungen des ersten Signals in bezug auf das zweite Signal versehen ist.

2. Vorrichtung nach Anspruch 1, dadurch gekennzeichnet, daß die Meßeinrichtung (4) in Strömungsrichtung vor dem Absorptionselement (9) und dem Sperrventil (8) angeordnet ist.

3. Vorrichtung nach Anspruch 1 bis 2, dadurch gekennzeichnet, daß die Meßeinrichtung (4) und das Sperrventil (8) signalleitend verbunden sind und daß das Sperrventil (8) durch das Signal der Meßeinrichtung (4) über die Hilfseinrichtung (6) betätigbar ist.

4. Vorrichtung nach Anspruch 1 bis 3, dadurch gekennzeichnet, daß die Hilfseinrichtung (6) Mittel zur Unterdrückung einer Anzeige von Abweichungen enthält, die einen willkürlich festgelegten Schwellwert unterschreiten.

## Claims

1. A device for the temporary storage and controlled feeding of the volatile fuel components in the free space (11) of a tank system (10) into the induction pipe (1) of a combustion engine (2), in which a shut-off valve (8) is arranged in a conduit (3) which is passed through an absorption element (9) into the induction pipe (1) of the combustion engine (2), a measuring arrangement (4) for the production of a first signal corresponding to the mass flow passed through being arranged in the conduit (3), and the shut-off valve (8) being assigned an auxiliary arrangement (6) for the production of a second signal corresponding quantitatively to the valve position, characterised in that the auxiliary arrangement (6) is provided for the purpose of comparing the first and the second signal and in that the auxiliary arrangement (6) is provided with at least one auxiliary means (7) for displaying deviations of the first signal relative to the second signal.

2. A device according to claim 1, characterised in that the measuring arrangement (4) is arranged upstream of the absorption element (9) and the shut-off valve (8).

3. A device according to either of claims 1 and 2, characterised in that the measuring arrangement (4) and the shut-off valve (8) are connected in a manner which allows the transmission of signals and in that the shut-off valve (8) is actuable via the auxiliary arrangement (6) by the signal of the measuring arrangement (4).

4. A device according to any of claims 1 to 3, characterised in that the auxiliary arrangement (6) contains means for suppressing the display of deviations which fall below an arbitrarily fixed threshold value.

## Revendications

1. Dispositif pour une accumulation temporaire et une alimentation dosée des composants volatils de carburant se trouvant dans le volume libre (11) d'un réservoir (10) jusque dans le tube d'admission (1) d'un moteur à combustion interne (2), où une soupape d'arrêt (8) est disposée dans un conduit (3) qui passe à travers un élément d'absorption (9) situé dans le tube d'admission (1) du moteur à combustion interne (2) et il est prévu dans le conduit (3) un dispositif de mesure (4) pour produire un premier signal correspondant au courant pondéral transmis, la soupape d'arrêt (8) étant associée à un dispositif auxiliaire (6) servant à produire un second signal correspondant quantitativement à la position de la soupape, caractérisé en ce que le dispositif auxiliaire (6) est prévu pour une comparaison du premier et du second signal et en ce que le dispositif auxiliaire (6) est pourvu d'au moins un moyen auxiliaire (7) pour indiquer des écarts du premier signal par rapport au second signal.

2. Dispositif selon la revendication 1, caractérisé en ce que le dispositif de mesure (4) est disposé, dans la direction d'écoulement, avant l'élément d'absorption (9) et la soupape d'arrêt (8).

3. Dispositif selon une des revendications 1 et 2, caractérisé en ce que le dispositif de mesure (4) et la soupape d'arrêt (8) sont reliés avec possibilité de transmission de signaux et en ce que la soupape d'arrêt (8) peut être actionnée par l'intermédiaire du dispositif auxiliaire (6) par le signal fourni par le dispositif de mesure (4).

4. Dispositif selon une des revendications 1 à 3, caractérisé en ce que le dispositif auxiliaire (6) contient des moyens pour interdire un affichage d'écarts qui sont inférieurs à une valeur de seuil établie à volonté.
